# EUROPEAN PATENT APPLICATION

(11) **EP 4 429 231 A1**
(43) Date of publication of application: **11.09.2024**
(21) Application number: 21966834.0
(22) Date of filing: 10.12.2021
(51) Int. Cl.: H04N 7/18

(54) **IMAGE DISPLAY METHOD AND DEVICE**

(71) Applicant: Huawei Technologies Co., Ltd., Shenzhen, Guangdong 518129 (CN)
(72) Inventor: ZHENG, Minghui, Shenzhen, Guangdong 518129 (CN); WANG, Peizhi, Shenzhen, Guangdong 518129 (CN); WANG, Yi, Shenzhen, Guangdong 518129 (CN)
(74) Representative: Goddar, Heinz J.
(86) International application number: PCT/CN2021/137180
(87) International publication number: WO 2023/102915

(57) **Abstract**

Embodiments of this application provide an image display method, including: obtaining environment information around a vehicle; processing the environment information, to obtain an image of an environment around the vehicle; and displaying the image on a display inside the vehicle based on a plurality of preset modes. According to the image display method in this application, images in a plurality of directions around the vehicle are fused into an integrated image, and the integrated image is displayed on the display inside the vehicle based on the preset mode. This can better meet a requirement of a driver for observing the environment around the vehicle.

## Description

### TECHNICAL FIELD

Embodiments of this application relate to the field of image display, and more specifically, to an image display method and apparatus.

### BACKGROUND

Generally, a vehicle is equipped with a left rear view mirror, a right rear view mirror, an outside rear view mirror, and an inside rear view mirror, to help a driver observe left, right, and rear views. For example, when the vehicle needs to change a lane or turn, the driver determines a driving status and a position of a rear-coming vehicle by observing the rear view mirror, to determine whether a lane change or turn behavior can be performed. A conventional rear view mirror is generally a plane mirror or a curved mirror. Due to an optical principle, the rear view mirror has many disadvantages, including: A visual range of the rear view mirror is limited, resulting in a blind area; the rear view mirror that is a curved mirror is affected by curvature, and a distance and an image are inevitably distorted, which affects judgment of the driver; the rear view mirror is greatly affected by adverse conditions such as rainy, snowy, and foggy weather, night, and strong light; the outside rear view mirror affects wind resistance of the vehicle and increases energy consumption of the vehicle; the inside rear view mirror is affected by a vehicle size and a passenger and an object in the vehicle; and the rear view mirror needs to be adjusted based on heights and seating poses of different drivers.

### SUMMARY

Embodiments of this application provide an image display method, to better meet a requirement of a driver for observing an environment around a vehicle.

According to a first aspect, an image display method is provided, including: obtaining environment information around a vehicle; processing the environment information, to obtain an image of an environment around the vehicle; and displaying the image on a display inside the vehicle based on a plurality of preset modes.

According to the image display method in embodiments of this application, the image of the environment around the vehicle is displayed on the display inside the vehicle in real time, to help a driver learn a status of the environment around the vehicle in real time, so as to ensure driving safety. There are a plurality of different modes for display of the image. This may be adjusted in real time based on a driving status of the vehicle, an environment change, and a driver requirement, to meet driving requirements in different cases.

With reference to the first aspect, in some implementations, the environment information includes image information in a plurality of directions of the vehicle. The processing the environment information, to obtain an image of an environment around the vehicle includes: performing image fusion processing on image information in a plurality of continuous directions in the plurality of directions, to obtain an integrated image. The integrated image indicates images in the plurality of continuous directions of the vehicle.

According to the image display method in embodiments of this application, images in the plurality of directions of the vehicle are fused into an integrated image, and the integrated image is displayed on the display inside the vehicle. In this way, the driver can form a multi-angle field of view without a blind area, to resolve a driving danger that may be caused by a blind area for a sight line.

With reference to the first aspect, in some implementations, the plurality of directions include a left rear of the vehicle, a direct rear of the vehicle, and a right rear of the vehicle.

If images of the left rear, the direct rear, and the right rear of the vehicle are displayed on the display inside the vehicle, the image display method in embodiments of this application may function as a conventional left outside, middle inside, and right outside rear view mirror. In this way, the vehicle does not need to be equipped with a conventional rear view mirror. This avoids an increase in fuel consumption caused by an increase in wind resistance by the conventional rear view mirror, and brings greater space for interior and exterior decorations of the vehicle.

With reference to the first aspect, in some implementations, the displaying the image on a display inside the vehicle based on a plurality of preset modes includes: displaying the integrated image in full screen on the display inside the vehicle; or displaying the integrated image in a partial area of the display.

The image display method in embodiments of this application includes a plurality of display modes. The image may be displayed in full screen on the display inside the vehicle, so that the driver can clearly observe the image, to learn a case around the vehicle. Alternatively, the image may be scaled down and displayed in any partial area of the display based on a habit of the driver. For example, the driver may display the image above a driver position, to avoid that a case at the rear of the vehicle can be observed only after the driver turns the head. Alternatively, the driver may display the image above a front passenger position, to avoid that the image blocks a front field of view.

With reference to the first aspect, in some implementations, the display is a transparent display, and the displaying the image on a display inside the vehicle based on a plurality of preset modes includes: setting transparency of a preset object in the image on the display to first transparency, and setting transparency of a background other than the preset object in the image on the display to second transparency.

According to the image display method in embodiments of this application, the transparency of the preset object in the image can be adjusted. For example, if the driver thinks that the displayed image causes interference to the sight line, the driver may choose to keep the transparency of the preset object like another vehicle or a pedestrian in the image displayed on the display unchanged, and reduce the transparency of the background other than the preset object. In this way, the driver can still learn cases of a coming vehicle and a pedestrian behind the vehicle in real time based on the preset object with high transparency on the display, and can observe a case in front of the vehicle through the background part with low transparency on the display, to avoid sight line interference and ensure driving safety.

With reference to the first aspect, in some implementations, the environment information further includes illumination information, and the processing the environment information includes: determining, based on the illumination information, whether light causes a person in the vehicle to be dazzled.

With reference to the first aspect, in some implementations, when it is determined that the light causes the person in the vehicle to be dazzled, the displaying the image on a display inside the vehicle based on a plurality of preset modes includes: determining a first area of the display, where the first area includes a position at which the light passes through the display; and reducing transparency of the first area.

With reference to the first aspect, in some implementations, the method further includes: displaying the image in a second area of the display, where the second area does not intersect the first area.

In embodiments of this application, the image is displayed on the display inside the vehicle, so that the display can further function as a sun shield. First, a position area in which the light passes through the display is determined, transparency of the area in which the light passes through the display is reduced, so that the light cannot penetrate the area, to prevent the person in the vehicle from being dazzled due to light. In addition, the image is suitably scaled down and displayed in another area of the display.

With reference to the first aspect, in some implementations, the environment information further includes a status of a preset object around the vehicle, the status includes a speed of the preset object and a distance between the preset object and the vehicle, and the processing the environment information includes: determining, based on the status of the preset object and a preset standard, whether the preset object is dangerous to the vehicle.

With reference to the first aspect, in some implementations, the displaying the image on a display inside the vehicle based on a plurality of preset modes includes: making a first identifier on the display for a preset object that is in the image and that is dangerous to the vehicle, and/or making a second identifier on the display for a preset object that is in the image and that is non-dangerous to the vehicle.

According to the image display method in embodiments of this application, enhanced display is performed on a dangerous preset object, the first identifier is made for the dangerous preset object, to remind the driver of avoidance, so as to ensure driving safety, and the second identifier is made for a non-dangerous preset object, so that the driver can drive at ease.

With reference to the first aspect, in some implementations, the display is disposed at any one or more of a front windshield, a rear windshield, a sunroof, and a vehicle window of the vehicle.

In embodiments of this application, the display may be disposed at a plurality of positions inside the vehicle based on an actual requirement, to meet requirements in different scenarios.

With reference to the first aspect, in some implementations, the method further includes: determining a first direction in the plurality of directions based on a driving status of the vehicle; and adjusting a display mode of image information in the first direction on the display. The display mode is one or more of the plurality of preset modes.

According to the image display method in embodiments of this application, a display mode of the image may be further flexibly adjusted based on the driving status of the vehicle. For example, when the driving status of the vehicle changes, a display mode may be adjusted to another display mode, or a plurality of display modes may be combined for use.

According to a second aspect, an image display apparatus is provided, including: an obtaining unit, configured to obtain environment information around a vehicle; and a processing unit, configured to process the environment information, to obtain an image of an environment around the vehicle. The processing unit is further configured to display the image on a display inside the vehicle based on a plurality of preset modes.

With reference to the second aspect, in some implementations, the environment information includes image information in a plurality of directions of the vehicle. The processing unit is specifically configured to perform image fusion processing on image information in a plurality of continuous directions in the plurality of directions, to obtain an integrated image. The integrated image indicates images in the plurality of continuous directions of the vehicle.

With reference to the second aspect, in some implementations, the plurality of directions include a left rear of the vehicle, a direct rear of the vehicle, and a right rear of the vehicle.

With reference to the second aspect, in some implementations, the processing unit is specifically configured to: display the integrated image in full screen on the display inside the vehicle; or display the integrated image in a partial area of the display.

With reference to the second aspect, in some implementations, the display is a transparent display, and the processing unit is specifically configured to: set transparency of a preset object in the image on the display to first transparency, and set transparency of a background other than the preset object in the image on the display to second transparency.

With reference to the second aspect, in some implementations, the environment information further includes illumination information, and the processing unit is specifically configured to determine, based on the illumination information, whether light causes a person in the vehicle to be dazzled.

With reference to the second aspect, in some implementations, when it is determined that the light causes the person in the vehicle to be dazzled, the processing unit is further configured to: determine a first area of the display, where the first area includes a position at which the light passes through the display; and reduce transparency of the first area.

With reference to the second aspect, in some implementations, the processing unit is further configured to display the image in a second area of the display, where the second area does not intersect the first area.

With reference to the second aspect, in some implementations, the environment information further includes a status of a preset object around the vehicle, the status includes a speed of the preset object and a distance between the preset object and the vehicle, and the processing unit is specifically configured to determine, based on the status of the preset object and a preset standard, whether the preset object is dangerous to the vehicle.

With reference to the second aspect, in some implementations, the processing unit is further configured to: make a first identifier on the display for a preset object that is in the image and that is dangerous to the vehicle, and/or make a second identifier on the display for a preset object that is in the image and that is non-dangerous to the vehicle.

With reference to the second aspect, in some implementations, the display is disposed at any one or more of a front windshield, a rear windshield, a sunroof, and a vehicle window of the vehicle.

With reference to the second aspect, in some implementations, the processing unit is further configured to: determine a first direction in the plurality of directions based on a driving status of the vehicle; and adjust a display mode of image information in the first direction on the display. The display mode is one or more of the plurality of preset modes.

According to a third aspect, a computer-readable medium is provided. The computer-readable medium stores program code used by a device for execution, and the program code is used to perform the method according to any implementation of the first aspect.

According to a fourth aspect, a chip is provided. The chip includes one or more processors and one or more data interfaces. The processor reads, through the data interface, instructions stored in a memory, to perform the method according to any implementation of the first aspect.

According to a fifth aspect, a computer program product is provided. When the computer program product runs on a computer, the computer is enabled to perform the method according to any implementation of the first aspect.

According to a sixth aspect, an electronic device is provided, including one or more processors. The one or more processors are coupled to one or more memories, and the one or more memories are configured to store instructions. When the processor executes the instructions stored in the memory, the method according to any implementation of the first aspect is implemented.

According to a seventh aspect, an embodiment of this application provides a vehicle. The vehicle includes the image display apparatus according to any implementation of the second aspect.

### BRIEF DESCRIPTION OF DRAWINGS

FIG. 1 is a schematic functional block diagram of a vehicle 100 according to an embodiment of this application;
FIG. 2 is a schematic diagram of an architecture of an image display system according to an embodiment of this application;
FIG. 3 is a schematic flowchart of an image display method according to an embodiment of this application;
FIG. 4 is a schematic flowchart of determining whether light causes a person inside a vehicle to be dazzled according to an embodiment of this application;
FIG. 5 is a schematic diagram of obtaining image information of the left rear, the direct rear, and the right rear of a vehicle by using a camera according to an embodiment of this application;
FIG. 6 is a schematic diagram of panoramic display of a rear image of a vehicle according to an embodiment of this application;
FIG. 7 is a schematic diagram of semi-transparent display of a rear image of a vehicle according to an embodiment of this application;
FIG. 8 is a schematic diagram of displaying a rear image of a vehicle in a partial area of a display according to an embodiment of this application;
FIG. 9 is a schematic diagram of a sun shield mode of an image displaying method according to an embodiment of this application;
FIG. 10 is a schematic diagram of performing enhanced display on a dangerous preset object according to an embodiment of this application;
FIG. 11 is a schematic diagram of adjusting an image display mode based on a vehicle status according to an embodiment of this application;
FIG. 12 is a schematic block diagram of an image display apparatus according to an embodiment of this application; and
FIG. 13 is a schematic diagram of a structure of an image display apparatus according to an embodiment of this application.

### DESCRIPTION OF EMBODIMENTS

The following describes technical solutions of this application with reference to accompanying drawings.

Because a conventional rear view mirror has many disadvantages, such as a blind area, distortion, and being susceptible to an external environment, an electronic outside rear view mirror is proposed. The electronic outside rear view mirror replaces a position of the conventional outside rear view mirror of a vehicle with an extension apparatus, and a camera is installed at an end of the extension apparatus. The camera is used to obtain an image of the rear of the vehicle, and the image is displayed on a display on one of two inner sides of the vehicle. Such electronic outside rear view mirror may improve a problem of a visual blind area to some extent. However, the extension apparatus, like the conventional outside rear view mirror, may increase wind resistance, and both the electronic outside rear view mirror and the conventional outside rear view mirror increase the width of the vehicle, which is not conducive for the vehicle to pass through a narrow area. In addition, when a seat of the driver is on the left, a display on the right inside the vehicle is easily blocked by a passenger or an object on a seat of a front passenger, which may bring a danger to driving. An electronic inside rear view mirror is further proposed. Similar to the electronic outside rear view mirror, the electronic inside rear view mirror is used to obtain the image of the rear of the vehicle by installing a camera at a vehicle rear. A position of the conventional inside rear view mirror inside the vehicle is replaced with an electronic display, and then the image is displayed on the display. Compared with that of the conventional internal rear view mirror, an electronic internal rear view mirror has a larger visual range, and a view angle is more than three times that of the conventional rear view mirror. The electronic internal rear view mirror may further process the obtained image, to improve a picture effect in a high light ratio environment. In addition, the electronic internal rear view mirror is not affected by glass fogging, or a person or an object inside the vehicle.

In general, the electronic rear view mirror is equivalent to replacing optical glass of the conventional rear view mirror with a display. The rear view mirror is still distributed at left, middle, and right positions in the vehicle. When the driver needs to observe a case of the rear of the vehicle, images on left, middle, and right displays need to be considered. A sight line conversion range of the driver is large, which may distract attention of the driver and is not conducive to driving safety.

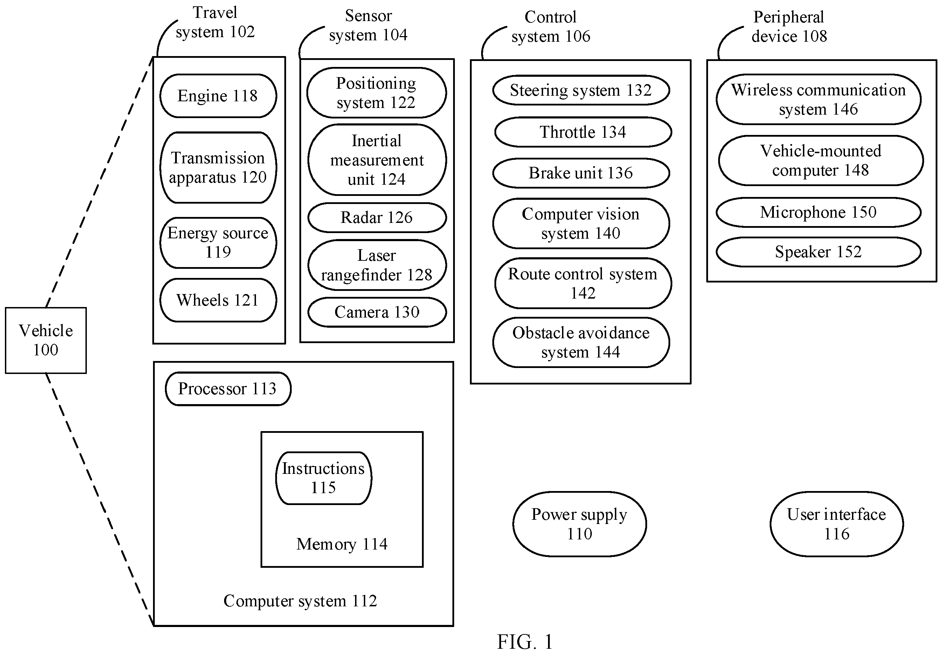

Therefore, embodiments of this application provide an image display method, to combine images in a plurality of directions (for example, the left rear, the direct rear, and the right rear) of a vehicle into an ultra-wide image, and display the ultra-wide image on a transparent display inside the vehicle, so that an apparatus in a form of a conventional rear view mirror is not needed, and the form of the conventional rear view mirror is thoroughly changed. The following first describes an applicable scenario of the image displaying method in embodiments of this application with reference to FIG. 1.

FIG. 1 is a functional block diagram of a vehicle 100 according to an embodiment of this application. The vehicle 100 may be configured to be in a manual driving mode, or a partially or completely autonomous driving mode. For example, the vehicle 100 may determine a driving status through a manual operation of a driver; or the vehicle 100 may control the vehicle 100 while the vehicle 100 is in an autonomous driving mode, may determine a current status of the vehicle and a current status of a surrounding environment of the vehicle through a manual operation, and control the vehicle 100 based on determined information. When the vehicle 100 is in the autonomous driving mode, the vehicle 100 may be set to operate without interaction with a person.

The vehicle 100 may include various subsystems, such as a travel system 102, a sensor system 104, a control system 106, one or more peripheral devices 108, a power supply 110, a computer system 112, and a user interface 116. Optionally, the vehicle 100 may include more or fewer subsystems, and each subsystem may include a plurality of components. In addition, all the subsystems and components of the vehicle 100 may be interconnected in a wired or wireless manner.

The travel system 102 may include a component providing power to the vehicle 100 for moving. In an embodiment, the travel system 102 may include an engine 118, an energy source 119, a transmission apparatus 120, and wheels/tires 121. The engine 118 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 118 converts the energy source 119 into mechanical energy.

Examples of energy sources 119 include gasoline, diesel, other petroleum-based fuels, propane, other compressed gas-based fuels, anhydrous alcohol, solar panels, batteries, or other sources of electricity. The energy source 119 may also provide energy to another system of the vehicle 100.

The transmission apparatus 120 may transmit mechanical power from the engine 118 to the wheel 121. The transmission apparatus 120 may include a gearbox, a differential, and a drive shaft. In an embodiment, the transmission apparatus 120 may further include another component, for example, a clutch. The drive shaft may include one or more shafts that may be coupled to one or more wheels 121.

The sensor system 104 (also referred to as a "collection device") may include several sensors that sense information about an environment around the vehicle 100. For example, the sensor system 104 may include a positioning system 122 (the positioning system may be a global positioning system (global positioning system, GPS), or may be a BeiDou system or another positioning system), an inertial measurement unit (inertial measurement unit, IMU) 124, a radar 126, a laser rangefinder 128, and a camera 130. The sensor system 104 may further include a sensor (for example, an in-vehicle air quality monitor, a fuel gauge, or an engine oil thermometer) of an internal system of the monitored vehicle 100. Sensor data from one or more of these sensors can be used to detect an object and corresponding features (a position, a shape, a direction, a speed, and the like) of the object. Such detection and identification are key functions of a safe operation of the autonomous vehicle 100. The sensor system 104 may obtain real-time environment information around the vehicle 100, including environment information around the vehicle 100 when the vehicle 100 is in a parking or driving state.

The positioning system 122 may be configured to estimate a geographic position of the vehicle 100. The IMU 124 is configured to sense a position and a head orientation change of the vehicle 100 based on an inertial acceleration. In an embodiment, the IMU 124 may be a combination of an accelerometer and a gyroscope.

The radar 126 may sense an object in the surrounding environment of the vehicle 100 through a radio signal. In some embodiments, in addition to sensing a target object, the radar 126 may be further configured to sense one or more states of a speed, a position, and a forward direction of the target object.

The laser rangefinder 128 may sense, by using a laser, an object in an environment of the vehicle 100. In some embodiments, the laser rangefinder 128 may include one or more laser sources, a laser scanner, one or more detectors, and other system components.

The camera 130 may be configured to capture a plurality of images of the surrounding environment of the vehicle 100. The camera 130 may be a static camera or a video camera.

The control system 106 controls operations of the vehicle 100 and components of the vehicle 100. The control system 106 may include various elements, including a steering system 132, a throttle 134, a brake unit 136, a computer vision system 140, a route control system 142, and an obstacle avoidance system 144.

The steering system 132 may be operated to adjust a moving direction of the vehicle 100. For example, in an embodiment, the steering system 133 may be a steering wheel system.

The throttle 134 is configured to control an operating speed of the engine 118 and further control a speed of the vehicle 100.

The brake unit 136 is configured to control the vehicle 100 to decelerate. The brake unit 136 may use friction to slow down the wheel 121. In another embodiment, the brake unit 136 may convert kinetic energy of the wheel 121 into a current. Alternatively, the brake unit 136 may reduce a rotational speed of the wheel 121 in another form to control the speed of the vehicle 100.

The computer vision system 140 may operate, process, and analyze the environment information obtained through the sensor system 104 to identify an object and/or a feature in the surrounding environment of the vehicle 100. The computer vision system 140 may use an object recognition algorithm, a structure from motion (structure from motion, SFM) algorithm, video tracking, and another computer vision technology. In some embodiments, the computer vision system 140 may be configured to draw a map for an environment, track an object, estimate a speed of the object, and the like.

The route control system 142 is configured to determine a driving route of the vehicle 100. In some embodiments, the route control system 142 may determine the travel route for the vehicle 100 based on data from the sensors, the GPS 122, and one or more predetermined maps.

The obstacle avoidance system 144 is configured to: identify, evaluate, and avoid or bypass a potential obstacle in the environment of the vehicle 100 in another manner.

Certainly, in an example, the control system 106 may add or alternatively include components in addition to those shown and described, or may delete some of the foregoing components.

In this embodiment of this application, the sensor system 104 and the control system 106 j ointly function to implement the image display method in this embodiment of this application. In some possible scenarios, for example, when a vehicle is parked on a roadside and needs to be started, or a vehicle is driving and needs to change a lane, the camera 130 in the sensor system 104 may obtain image information of the rear of the vehicle, and the computer vision system 140 in the control system 106 may perform processing on the image information (for example, perform image noise reduction processing), and then display a processed image on a transparent display inside the vehicle 100. The computer vision system 140 may further predict, based on a speed of a rear-coming vehicle and a distance between the rear-coming vehicle and the vehicle 100 that are obtained by using the radar 126 in the sensor system 104, and with reference to a position and a speed change of the vehicle 100 that are obtained by using the positioning system 122, whether the rear-coming vehicle poses a threat to driving of the vehicle 100, and mark a dangerous vehicle on the transparent display to remind the driver of paying attention.

The vehicle 100 interacts with an external sensor, another vehicle, another computer system, or a user by using the peripheral device 108. The peripheral device 108 may include a wireless communication system 146, a vehicle-mounted computer 148, a microphone 150, and/or a speaker 152.

In some embodiments, the peripheral device 108 provides a means for the user of the vehicle 100 to interact with the user interface 116. For example, the vehicle-mounted computer 148 may provide information to the user of the vehicle 100. The user interface 116 may further operate the vehicle-mounted computer 148 to receive an input from the user. The vehicle-mounted computer 148 may perform an operation on a touchscreen. In another case, the peripheral device 108 may provide a means for the vehicle 100 to communicate with another device located in the vehicle. For example, the microphone 150 may receive audio (for example, a voice command or another audio input) from the user of the vehicle 100. Likewise, the speaker 152 may output audio to the user of the vehicle 100.

The wireless communication system 146 may perform wireless communication with one or more devices directly or through a communication network. For example, the wireless communication system 146 may use the fourth generation (fourth generation, 4G) communication or the fifth generation (5th-Generation, 5G) communication. The wireless communication system 146 may communicate with a wireless local area network (wireless local area network, WLAN) by using a wireless fidelity (wireless fidelity, Wi-Fi) technology. In some embodiments, the wireless communication system 146 may directly communicate with a device by using an infrared link, Bluetooth, or ZigBee (ZigBee). Other wireless protocols, for example, various vehicle communication systems, such as the wireless communication system 146, may include one or more dedicated short range communication (dedicated short range communication, DSRC) devices, and these devices may include public and/or private data communication between vehicle and/or roadside stations.

The power supply 110 may provide power to various components of the vehicle 100. In an embodiment, the power supply 110 may be a rechargeable lithium-ion or lead-acid battery. One or more battery packs of such batteries may be configured as the power supply to supply power to the components of the vehicle 100. In some embodiments, the power supply 110 and the energy source 119 may be implemented together, for example, in some pure electric vehicles.

Some or all of functions of the vehicle 100 are controlled by the computer system 112. The computer system 112 may include at least one processor 113. The processor 113 executes instructions 115 stored in a non-transitory computer-readable medium like a data memory 114. The computer system 112 may alternatively be a plurality of computing devices that control an individual component or a subsystem of the vehicle 100 in a distributed manner.

The processor 113 may be any conventional processor like a commercially available central processing unit (central processing unit, CPU). Alternatively, the processor may be a dedicated device such as an application-specific integrated circuit (application-specific integrated circuit, ASIC) or another hardware-based processor. Although FIG. 1 functionally illustrates a processor, a memory, and other components of a computer 110 in a same block, a person of ordinary skill in the art should understand that the processor, the computer, or the memory may actually include a plurality of processors, computers, or memories that may or may not be stored in a same physical housing. For example, the memory may be a hard disk drive, or another storage medium located in a housing different from that of the computer 110. Thus, it is understood that a reference to the processor or the computer includes a reference to a set of processors or computers or memories that may or may not operate in parallel. Different from using a single processor to perform the steps described herein, some components such as a steering component and a deceleration component may include respective processors. The processor performs only computation related to a component-specific function.

In various aspects described herein, the processor may be located far away from the vehicle and wirelessly communicate with the vehicle. In another aspect, some processes described herein are performed on a processor disposed inside the vehicle, while others are performed by a remote processor, including performing steps necessary for single manipulation.

In some embodiments, the memory 114 may include the instructions 115 (for example, program logic), and the instructions 115 may be executed by the processor 113 to perform various functions of the vehicle 100, including the functions described above. The memory 114 may also include extra instructions, including instructions used to send data to, receive data from, interact with, and/or control one or more of the travel system 102, the sensor system 104, the control system 106, and the peripheral device 108.

In addition to the instructions 115, the memory 114 may further store data, such as a road map, route information, and a position, a direction, a speed, and other such vehicle data of the vehicle, and other information. Such information may be used by the vehicle 100 and the computer system 112 when the vehicle 100 operates in an autonomous mode, a semi-autonomous mode, and/or a manual mode.

The user interface 116 is configured to provide information for or receive information from the user of the vehicle 100. Optionally, the user interface 116 may include one or more input/output devices within a set of peripheral devices 108, for example, the wireless communication system 146, the vehicle-mounted computer 148, the microphone 150, and the speaker 152.

The computer system 112 may control a function of the vehicle 100 based on inputs received from various subsystems (for example, the travel system 102, the sensor system 104, and the control system 106) and from the user interface 116. For example, the computer system 112 may use an input from the control system 106 to control the steering unit 132 to avoid an obstacle detected by the sensor system 104 and the obstacle avoidance system 144. In some embodiments, the computer system 112 may be operated to provide control over many aspects of the vehicle 100 and the subsystems of the vehicle 100.

Optionally, one or more of the foregoing components may be installed separately from or associated with the vehicle 100. For example, the memory 114 may be partially or totally separated from the vehicle 100. The foregoing components may be communicatively coupled together in a wired and/or wireless manner.

Optionally, the foregoing component is merely an example. During actual application, components in the foregoing modules may be added or removed based on an actual requirement. FIG. 1 should not be construed as a limitation on this embodiment of this application.

The vehicle 100 may be a car, a truck, a motorcycle, a bus, a boat, an airplane, a helicopter, a recreational vehicle, a playground vehicle, a construction device, a trolley, a train, or the like. This is not specifically limited in embodiments of this application.

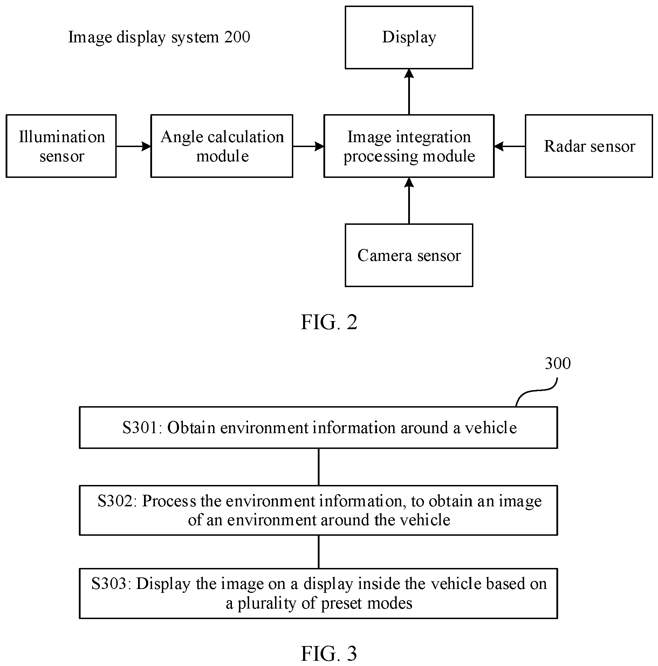

FIG. 2 is a schematic diagram of an architecture of an image display system according to an embodiment of this application. An image display system 200 shown in FIG. 2 may be applied to the vehicle 100 shown in FIG. 1. For example, the image display system 200 shown in FIG. 2 processes and displays a scenario image around the vehicle 100, so that the driver in the vehicle 100 can learn about a case around the vehicle 100 by using the image display system 200. As shown in FIG. 2, the image display system 200 includes a display, an image integration processing module, an illumination sensor, an angle calculation module, a radar sensor, a camera sensor, and the like. The camera sensor is configured to obtain an image in a scenario around a vehicle and send the obtained image to the image integration processing module. The image integration processing module processes the image, including fusing the obtained images in a plurality of directions into an integrated image, or performing clarity processing on the obtained image and then displaying a processed image on a display. The illumination sensor is configured to: obtain illumination information around the vehicle, and then send the illumination information to the angle calculation module. The angle calculation module determines, based on the illumination information, whether light illuminates eyes of a person inside the vehicle, and then sends a determining result to the image integration processing module. The image integration processing module adjusts the image on the display based on the determining result. The radar sensor is configured to obtain information about an object around the vehicle, including a direction, a speed, a distance between the vehicle and another vehicle or a pedestrian, and the like of the another vehicle or the pedestrian, determine, based on the information about the object, whether the object causes danger to a current driving status of the vehicle, and send a determining result to the image integration processing module. The image integration processing module adjusts a display status of the object on the display based on the determining result, for example, performs special display on an object that may be dangerous.

FIG. 3 is a schematic flowchart of an image display method 300 according to an embodiment of this application. The method shown in FIG. 3 may be applied to the image display system shown in FIG. 2 or the vehicle 100 shown in FIG. 1. As shown in FIG. 3, the method 300 includes step 301 to step 303. The following separately provides descriptions.

S301: Obtain environment information around a vehicle.

Specifically, obtaining the environment information around the vehicle includes at least one of obtaining image information around the vehicle by using a camera, obtaining information about another object around the vehicle by using a radar sensor, obtaining illumination information outside the vehicle by using an illumination sensor, and the like. It should be understood that the foregoing plurality of sensors may be installed at any possible position inside or outside the vehicle. This is not limited in embodiments of this application.

For example, the vehicle in embodiments of this application may be in a driving state, a parking state, or the like. This is not limited in embodiments of this application.

S302: Process the environment information, to obtain an image of an environment around the vehicle.

Specifically, the obtained image information around the vehicle includes image information in a plurality of directions of the vehicle. Image fusion processing is performed on image information in a plurality of continuous directions in the plurality of directions, to obtain an integrated image. The integrated image indicates images in the plurality of continuous directions of the vehicle. The plurality of directions of the vehicle include a plurality of any directions in a 360-degree direction centered on the vehicle. For the obtained image information in the plurality of directions, the image information in the plurality of directions may be fused into an integrated image, or the image information in the plurality of continuous directions in the plurality of directions is selected based on a presetting and is fused into the integrated image. For example, image information in a 270-degree direction around the vehicle is obtained by using the camera, and the image information in the 270-degree direction may be fused into an integrated image, or image information in a continuous 180-degree direction in the 270-degree direction may be fused into an integrated image. An image fusion method used in embodiments of this application may be any existing possible image splicing and fusion method, for example, splicing based on a Harris corner detector, splicing based on a feature from accelerated segment test (feature from accelerated segment test, FAST) corner detector, splicing based on a scale invariant feature transform (scale invariant feature transform, SIFT) feature detector, splicing based on a speeded up robust feature (speeded up robust feature, SURF) feature detector, splicing based on feathering, pyramid-based splicing, or gradient-based splicing. This is not limited in embodiments of this application.

Optionally, in addition to fusion processing of the image, clarity processing may be further performed on the image. For example, noise of the image is reduced.

S303: Display the image on a display inside the vehicle based on a plurality of preset modes.

The obtained integrated image is displayed on the display inside the vehicle. It should be understood that the display inside the vehicle herein includes a display installed inside the vehicle, for example, a central control screen. Alternatively, vehicle window glass of the vehicle is partially or completely the display, specifically including any one or more of a front windshield, a rear windshield, a sunroof, and a vehicle window of the vehicle. Alternatively, the integrated image may be projected on the vehicle window glass. For example, the integrated image is mapped to a windscreen in front of a driver by using a head-up display (head-up display, HUD) technology. When the driver wears corresponding augmented reality (augmented reality, AR) glasses or mixed reality (mixed reality, MR) glasses in the vehicle, the integrated image may alternatively be projected on the AR glasses or the MR glasses.

In embodiments of this application, the image is displayed on the display in a plurality of modes. The image is displayed on the display inside the vehicle based on the preset mode, so that the driver can more conveniently observe a case around the vehicle. The following specifically describes the plurality of preset modes in which the image is displayed on the display.

In a possible implementation, the integrated image obtained through processing may be displayed in full screen on the display inside the vehicle, or may be displayed only in a partial area of the display. For example, displaying the image in full screen on the display may enable the driver to observe the case around the vehicle more clearly, or when the display is large, the image is suitably scaled down and displayed in a partial area close to the driver on the display, to avoid that the driver needs to turn around to observe all cases around the vehicle.

In another possible implementation, in this embodiment of this application, transparency of the image displayed on the display may be adjusted. Specifically, transparency of a preset object in the image on the display may be set to first transparency, and transparency of a background other than the preset object in the image on the display may be set to second transparency. The preset object herein may be another vehicle, a pedestrian, a road sign, or the like. Specifically, the preset object may be preset by a developer, or may be set by the driver based on a habit of the driver in a use process. For example, if the driver considers that the background of the image is excessively cluttered and may affect determining, or when the image is displayed on the vehicle window glass, the background part may block a sight line, the driver may keep the transparency of the preset object in the image unchanged or increase the transparency of the preset object, and reduce the transparency of the background part in the image, so that the driver can learn about a case around the vehicle based on the preset object while reducing interference of the background part of the image.

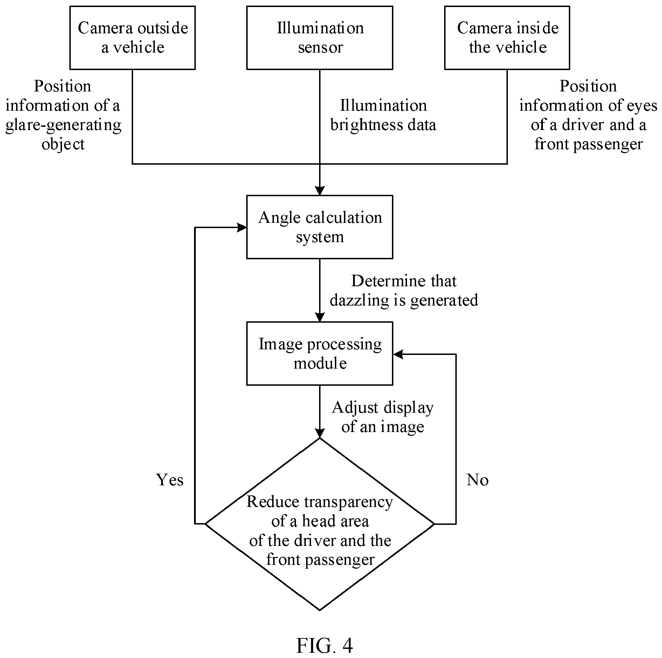

Further, when the display is disposed on the vehicle window glass or the image is projected on the vehicle window glass, the transparency of the image on the display may be adjusted, so that the display may further play a sunshade role. Specifically, as shown in FIG. 4, the camera outside the vehicle obtains position information of a glare-generating object (for example, sunlight, various reflected light, and a high beam of a vehicle opposite to the vehicle), and transmits the position information of the glare-generating object to an angle calculation system. The light sensor obtains corresponding illumination brightness data, and transmits the illumination brightness data to the angle calculation system. The camera inside the vehicle obtains position information of eyes of a driver and a front passenger, and transmits position information of eyes of the driver and the front passenger to the angle calculation system. After obtaining the information, the angle calculation system performs corresponding calculation, comprehensively determines whether light causes the driver and the front passenger to be dazzled, and when determining that the light causes a person inside the vehicle to be dazzled, sends an instruction to an image processing module. That the image processing module adjusts a display status of the image on the display based on the instruction includes: obtaining a position at which the light passes through the display, determining a first area of the display by using the position as a center, then reducing transparency of the first area, and displaying the image in a second area of the display, where the second area does not intersect the first area. In this way, that the person inside the vehicle is dazzled caused by passing through the display of the light may be avoided. For example, when the display is divided into three parts: a left part, a middle part, and a right part, and the position at which the light passes through the display is on the left part of the display, it is determined that the first area is the left part of the display, transparency of the left part of the display is reduced, so that the light cannot pass through the display, and the image is displayed on the middle part or the right part of the display.

Optionally, the environment information obtained in S301 further includes a status of the preset object around the vehicle. Specifically, a radar sensor may be used to obtain a speed of the preset object and a distance between the preset object and the vehicle, and the like. The preset object may be the another vehicle, the pedestrian, or the like. It may be determined, based on the obtained status of the preset object and a preset standard, whether the preset object is dangerous to the vehicle. Then a first identifier is made on the display for a preset object that is in the image and that is dangerous to the vehicle, and/or a second identifier is made on the display for a preset object that is in the image and that is non-dangerous to the vehicle. For example, if the distance between the preset object and the vehicle is less than a preset safe distance, or the speed of the preset object exceeds a preset safe speed, it is determined that the preset object is dangerous to the vehicle. The first identifier may be that the preset object is displayed in red, to remind the driver of avoidance. The second identifier may be that the preset object is displayed in green, to indicate that the preset object is non-dangerous to the vehicle, and the driver may drive at ease.

It should be understood that the plurality of preset modes may be used separately, or may be used in combination. In addition, the method in this embodiment of this application further includes: determining a first direction in a plurality of directions around the vehicle based on a driving status of the vehicle, and then adjusting a display mode of image information in the first direction on the display. The display mode is one or more of the plurality of preset modes. For example, when it is determined that a current driving status of the vehicle is to change a lane to the right, special attention needs to be paid to an environment condition of the right rear of the vehicle. In this case, it is determined that the first direction is the right rear of the vehicle, and then a display mode of image information of the right rear on the display is adjusted. For example, an image of the right rear may be scaled up and displayed, and an image of another direction may be scaled down and displayed. In addition, transparency of an image background in the another direction may be reduced, and a vehicle that is in the coming vehicle at the right rear of the vehicle and that may be dangerous to the vehicle may be specially marked. In this way, a display mode of a corresponding image on the display is adjusted with reference to the current driving status of the vehicle, which can better match a current requirement of a user.

According to the image display method in this embodiment of this application, the image information in the plurality of directions around the vehicle is fused into the integrated image, and the integrated image is displayed on the display inside the vehicle. The image is adjusted in real time with the driving status of the vehicle, so that the driver can observe a specific case around the vehicle in real time, and a field of view picture is wide. This may effectively resolve a problem of a blind area for a sight line. According to the image display method in this embodiment of this application, transparency of the image on the display may be adjusted in real time, to avoid interfering with the sight line of the driver, and the display may play a sunshade role. In this embodiment of this application, the preset object that may be dangerous in the image may be further performed enhanced display, to remind the driver of paying attention, and ensure driving safety. According to the method in this embodiment of this application, the display status of the image may be further flexibly adjusted based on the driving status of the vehicle, to better match a current requirement of the user.

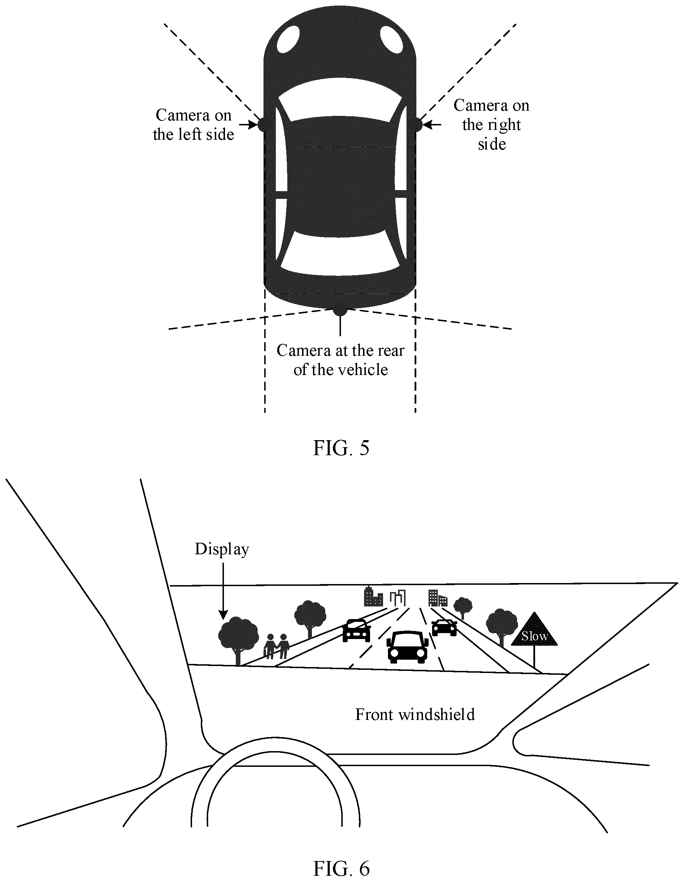

As described above, both a conventional rear view mirror and an existing electronic rear view mirror have many disadvantages. In the image display method in this embodiment of this application, when the plurality of directions of obtained image information include only the left rear, the direct rear, and the right rear of the vehicle, the image display method in this embodiment of this application may replace a function of the existing rear view mirror. FIG. 5 is a schematic diagram of obtaining image information of the left rear, the direct rear, and the right rear of the vehicle. As shown in FIG. 5, cameras may be installed outside a left vehicle window, outside a right vehicle window, and at a rear of the vehicle. It is assumed that the camera outside the left vehicle window and the camera outside the right vehicle window may separately obtain image information in a 120-degree direction, and the camera at the rear of the vehicle may obtain image information in a 150-degree direction. Directions of obtaining image information by each camera may partially overlap, so that the cameras shown in FIG. 5 may obtain image information in a 240-degree direction around the vehicle. Compared with the conventional rear view mirror or the existing electronic rear view mirror, an image obtained by using the method in this embodiment of this application has a wider field of view, and can avoid a blind area for a sight line, to improve driving safety. In addition, the method in this embodiment of this application is used, the conventional rear view mirror or an apparatus similar to the conventional rear view mirror does not need to be equipped, and a form of the rear view mirror can be completely changed.

With reference to FIG. 6 to FIG. 11, the following describes an application scenario of the image display method in embodiments of this application. An example in which images in the left rear, direct rear, and right rear directions of the vehicle are displayed on a front windshield of the vehicle is used. However, it should be understood that, in actual application, images in the plurality of directions around the vehicle may be displayed on any possible display inside the vehicle according to the image display method in embodiments of this application. The following descriptions of FIG. 6 to FIG. 11 are merely examples of application scenarios of the image display method in embodiments of this application, and do not constitute a limitation on embodiments of this application.

FIG. 6 is a schematic diagram of panoramic display of a rear image of a vehicle according to an embodiment of this application. First, a camera sensor of the vehicle obtains image information in left rear, direct rear, and right rear directions of the vehicle. An image processing unit of the vehicle performs image fusion processing on the image information, so that the images in the left rear, direct rear, and right rear directions of the vehicle are fused into a continuous integrated image, and the integrated image is displayed on a display inside the vehicle. As shown in FIG. 6, the display is located on an upper part of a front windshield of the vehicle. When performing image fusion processing on the image information, the image processing unit of the vehicle may further perform other processing on the image information, for example, noise reduction processing, to make the image clearer. The image is displayed on the upper part of the front windshield of the vehicle. Generally, the sight line of the driver may not be blocked. The image is adjusted in real time based on the driving status of the vehicle, and a 180-degree wide field of view picture is always maintained, to resolve the problem of blind area for the sight line.

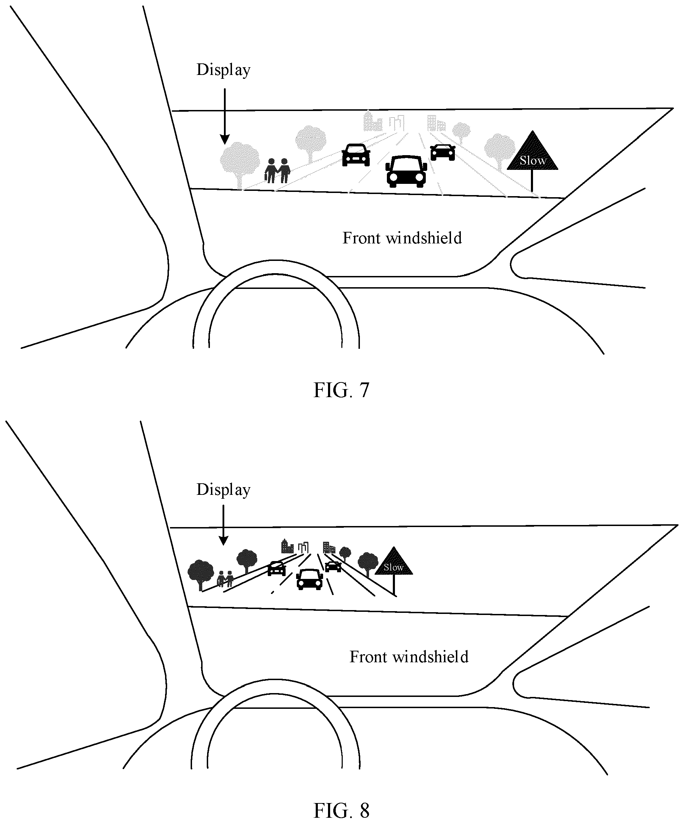

The image is displayed on the upper part of the front windshield of the vehicle. Generally, the sight line of the driver may not be blocked. However, if the driver still thinks that the displayed image causes interference to the sight line, the method in this embodiment of this application further includes: adjusting the transparency of the preset object in the image. FIG. 7 is a schematic diagram of semi-transparent display of a rear image of a vehicle according to an embodiment of this application. When the driver thinks that the displayed image causes interference to the sight line, the driver may choose to keep transparency of a preset object like another vehicle or a pedestrian in the image displayed on the display unchanged, and reduce transparency of a background other than the preset object. In this way, the driver can still learn cases of a coming vehicle and a pedestrian behind the vehicle in real time based on the preset object with high transparency on the display, and can observe a case in front of the vehicle through the background part with low transparency on the display, to avoid sight line interference and ensure driving safety. It should be understood that specific content (for example, another vehicle, a pedestrian, an animal, or a road sign) included in the preset object herein may be preset before the vehicle is delivered from a factory, or may be reset by the driver based on a habit of the driver in a use process. This is not limited in embodiments of this application.

The integrated image may be displayed on the entire display. For example, in FIG. 6, the display includes an entire part from left to right of the upper part of the front windshield of the vehicle, and the integrated image is also displayed on the entire part from left to right of the upper part of the front windshield. In this embodiment of this application, the integrated image may be suitably scaled down, so that the image is displayed only in a partial area of the display. FIG. 8 is a schematic diagram of displaying a rear image of a vehicle in a partial area of a display according to an embodiment of this application. The driver may suitably scale down the image and display the image in any area of the display based on a habit of the driver. For example, the driver may display the image above a driver position, to avoid that a case at the rear of the vehicle can be observed only after the driver turns the head. Alternatively, the driver may display the image above a front passenger position, to avoid that the image blocks a front field of view.

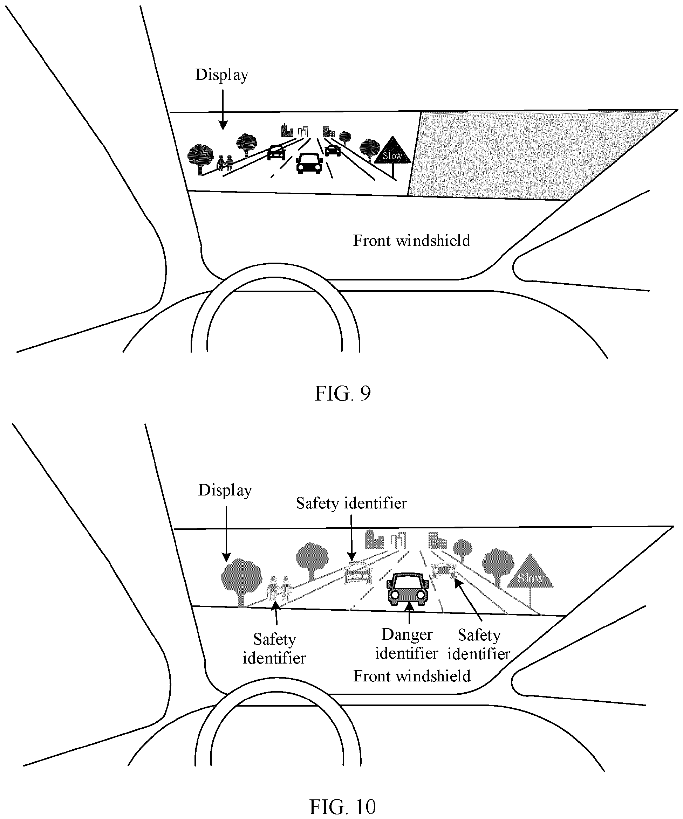

In this embodiment of this application, the image is displayed on the upper part of the front windshield of the vehicle, so that the display can further function as a sun shield. FIG. 9 is a schematic diagram of a sun shield mode of an image display method according to an embodiment of this application. An illumination sensor obtains light illumination information and transmits the light illumination information to an angle calculation unit. The angle calculation unit determines whether the light illuminates eyes of a person in a front row of the vehicle. If the angle calculation unit determines that the light illuminates the eyes of the person in the front row of the vehicle, may further determine a position area in which the light passes through the display, and sends an instruction to an image processing unit. The image processing unit adjusts transparency of the image in real time based on the instruction. As shown in FIG. 9, when it is determined that the light may illuminate eyes of a person at the driver position, transparency of an area in which the light passes through the display above the driver position is reduced, so that the light cannot penetrate the area, and the eyes of the person at the driver position are prevented from being illuminated by the light. In addition, the image is suitably scaled down and displayed in an area other than the display area above the driver position. Correspondingly, if it is determined that the light may illuminate eyes of a person at the front passenger position, transparency of an area in which the light passes through the display above the front passenger position is reduced, and the image is suitably scaled down and displayed in an area other than the display area above the front passenger position. Alternatively, if it is determined that the light may simultaneously illuminate the eyes of the person at the driver position and the person at the front passenger position, transparency of an area in which the light passes through the display above the positions of the driver and the front passenger is reduced, and the image is suitably scaled down and displayed in an area of the display above a position between the driver and the front passenger.

In this embodiment of this application, enhanced display may be further performed on a preset object that may be dangerous in the image. FIG. 10 is a schematic diagram of performing enhanced display on a dangerous preset object in an image display method according to an embodiment of this application. A radar sensor of the vehicle may detect, through a radio signal, information such as a distance between the preset object behind the vehicle and the vehicle, and a speed and a direction of the preset object, then determine, based on the information and with reference to a current driving status of the vehicle, whether the preset object may bring a danger to the vehicle, and perform enhanced display on a preset object that may cause a danger to the vehicle. For example, when the vehicle is to change a lane to the left, it is determined whether a left-rear-coming vehicle may bring a danger to the vehicle, and a coming vehicle at an excessively close distance or at an excessively fast speed is marked with a red danger identifier, to remind the driver of paying attention, and ensure driving safety. Optionally, a preset object that does not cause a danger to the vehicle may be marked with a safety identifier. For example, the preset object that does not cause a danger to the vehicle is displayed in green, so that the driver can drive at ease.

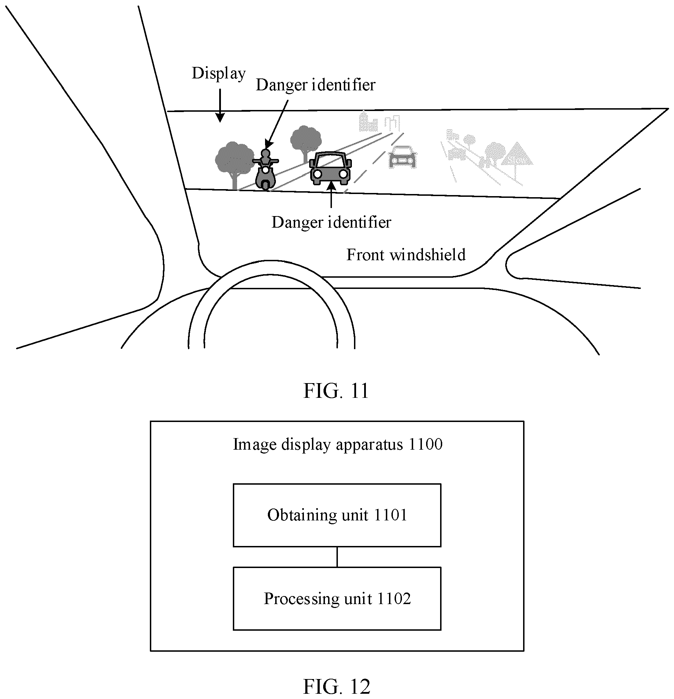

According to the method in this embodiment of this application, a display status of the image may be further flexibly adjusted based on the driving status of the vehicle. FIG. 11 shows a method for displaying an image based on a vehicle status according to an embodiment of this application. As shown in FIG. 11, when the vehicle is to turn a lane to the left, an image of the left rear of the vehicle may be completely displayed on the display, and images of the direct rear and the right rear of the vehicle each are scaled down and displayed on the display. In addition, transparency of the image of the left rear of the vehicle is adjusted, so that the image of the left rear of the vehicle can be clearly displayed on the display, and transparency of the images of the direct rear and the right rear of the vehicle is suitably reduced, to avoid interference to the sight line of the driver. In addition, a preset object in the image of the left rear of the vehicle is determined, and a preset object that may cause a danger is performed enhanced display. However, this processing is not performed on the images of the direct rear and the right rear of the vehicle, to avoid interfering with determining of the driver.

The image display method in FIG. 6 to FIG. 11 is used to display scenario images of the left rear, the direct rear, and/or the right rear of the vehicle on the upper part of the front windshield of the vehicle, to avoid disadvantages such as a blind area for a sight line of the rear view mirror and an increase of wind resistance. This changes a form of the existing rear view mirror, and brings more creative space for interior and exterior decorations of the vehicle.

It should be understood that the driver may control image display by tapping a central control screen of an in-vehicle infotainment (for example, a corresponding operation for image display is displayed on the central control screen), or may directly tap a display for image display (for example, a corresponding operation for image display is displayed on the display), or may implement corresponding control by using a voice instruction. This is not limited in embodiments of this application.

The foregoing describes in detail the image display method in embodiments of this application with reference to the accompanying drawings. The following describes an image display apparatus in embodiments of this application. It should be understood that the image display apparatus in embodiments of this application can perform steps of the image display method in this application. The following suitably omits repeated descriptions when describing the image display apparatus in embodiments of this application.

FIG. 12 is a schematic block diagram of an image display apparatus according to this application. The image display apparatus may be a terminal, or may be a chip in the terminal. As shown in FIG. 12, the image display apparatus includes an obtaining unit 1201 and a processing unit 1202. Descriptions are briefly provided in the following.

The obtaining unit 1201 is configured to obtain environment information around a vehicle.

The processing unit 1202 is configured to process the environment information, to obtain an image of an environment around the vehicle. The processing unit is further configured to display the image on a display inside the vehicle based on a plurality of preset modes.

In some implementations, the environment information includes image information in a plurality of directions of the vehicle, and the processing unit is specifically configured to perform image fusion processing on image information in a plurality of continuous directions in the plurality of directions, to obtain an integrated image. The integrated image indicates images in the plurality of continuous directions of the vehicle.

In some implementations, the plurality of directions include a left rear of the vehicle, a direct rear of the vehicle, and a right rear of the vehicle.

In some implementations, the processing unit 1202 is specifically configured to: display the integrated image in full screen on the display inside the vehicle; or display the integrated image in a partial area of the display.

In some implementations, the display is a transparent display, and the processing unit 1202 is specifically configured to: set transparency of a preset object in the image on the display to first transparency, and set transparency of a background other than the preset object in the image on the display to second transparency.

In some implementations, the environment information further includes illumination information, and the processing unit 1202 is specifically configured to determine, based on the illumination information, whether light affects a sight line of a person in the vehicle.

In some implementations, when it is determined that the light affects the sight line of the person in the vehicle, the processing unit 1202 is further configured to: determine a first area of the display, where the first area includes a position at which the light passes through the display; and reduce transparency of the first area.

In some implementations, the processing unit 1202 is further configured to display the image in a second area of the display, where the second area does not intersect the first area.

In some implementations, the environment information further includes a status of a preset object around the vehicle, the status includes a speed of the preset object and a distance between the preset object and the vehicle, and the processing unit 1202 is specifically configured to determine, based on the status of the preset object and a preset standard, whether the preset object is dangerous to the vehicle.

In some implementations, the processing unit 1202 is further configured to: make a first identifier on the display for a preset object that is in the image and that is dangerous to the vehicle, and/or make a second identifier on the display for a preset object that is in the image and that is non-dangerous to the vehicle.

In some implementations, the display is disposed at any one or more of a front windshield, a rear windshield, a sunroof, and a vehicle window of the vehicle.

In some implementations, the processing unit 1202 is further configured to: determine a first direction in the plurality of directions based on a driving status of the vehicle; and adjust a display mode of image information in the first direction on the display. The display mode is one or more of the plurality of preset modes.

It should be understood that the image display apparatus shown in FIG. 12 may be configured to implement the image display method 300. The obtaining unit 1201 is configured to implement step 301, and the processing unit 1202 is configured to implement step 302 and step 303. The image display apparatus shown in FIG. 12 may be further configured to implement the image display method described in FIG. 6 to FIG. 11. For specific steps, refer to the descriptions of FIG. 6 to FIG. 11. For brevity, details are not described herein again in this embodiment of this application.

It should be understood that the image display apparatus 1200 in this embodiment of this application may be implemented by software, for example, a computer program or instructions having the foregoing functions, and the corresponding computer program or the corresponding instructions may be stored in a memory inside the terminal. A processor reads the corresponding computer program or the corresponding instructions in the memory to implement the foregoing functions. Alternatively, the image display apparatus 1200 in this embodiment of this application may be implemented by hardware. The processing unit 1202 is a processor (such as an NPU, a GPU, or a processor in a system chip), and the obtaining unit 1201 is a data interface. Alternatively, the image display apparatus 1200 in this embodiment of this application may be implemented by a combination of the processor and a software unit. Specifically, the obtaining unit 1201 may be an interface circuit of the processor, a camera or a radar sensor of the terminal, or the like. For example, the camera or the radar sensor of the terminal sends the obtained environment information around the vehicle to the interface circuit of the processor.

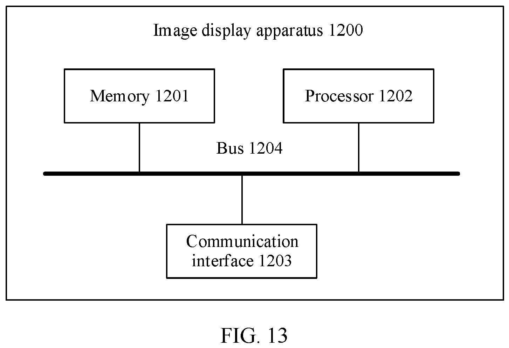

FIG. 13 is a schematic diagram of a structure of an image display apparatus 1300 according to an embodiment of this application. The apparatus 1300 shown in FIG. 13 includes a memory 1301, a processor 1302, a communication interface 1303, and a bus 1304. The memory 1301, the processor 1302, and the communication interface 1303 are communicatively connected to each other through the bus 1304.

It should be understood that the obtaining unit 1301 in FIG. 13 may be equivalent to a sensor (a sensor is not shown in FIG. 13) in the apparatus 1300, and a processing unit 1002 and a processing unit 1302 may be equivalent to the processor 1302 in the apparatus 1300. The following describes the units and units in the apparatus 1300 in detail.

The memory 1301 may be a read-only memory (read-only memory, ROM), a static storage device, a dynamic storage device, or a random access memory (random access memory, RAM). The memory 1301 may store a program. When executing the program stored in the memory 1301, the processor 1302 is configured to perform steps of the image display method in embodiments of this application.

Specifically, the processor 1302 may be configured to perform step 302 and step 303 in the method shown in FIG. 3. In addition, the processor 1302 may further perform the process shown in FIG. 6 to FIG. 11.

When the processor 1302 performs step 302 and step 303, the processor 1302 may obtain environment information around a vehicle from the sensor of the apparatus 1300 through the communication interface 1303, process the obtained environment information, and display, on a display inside the vehicle, an integrated image that is of an environment around the vehicle and that is obtained through processing.

The processor 1302 may use a general-purpose central processing unit (central processing unit, CPU), a microprocessor, an application-specific integrated circuit (application-specific integrated circuit, ASIC), a graphics processing unit (graphics processing unit, GPU), or one or more integrated circuits, and is configured to execute a related program, to implement the image display method in embodiments of this application.

The processor 1302 may alternatively be an integrated circuit chip and has a signal processing capability. In an implementation process, the steps of the method in this application may be implemented through an integrated logic circuit of hardware in the processor 1302, or instructions in a form of software.

The processor 1302 may be alternatively a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software units in the decoding processor. A software unit may be located in a mature storage medium in the art, such as a random access memory, a flash memory, a read-only memory, a programmable read-only memory, an electrically erasable programmable memory, a register, or the like. The storage medium is located in the memory 1301. The processor 1302 reads information in the memory 1301, and completes, in combination with hardware of the processor 1302, functions that need to be performed by units included in the apparatus, or performs the image display method in the method embodiments of this application.

The communication interface 1303 uses a transceiver apparatus, for example, but not limited to, a transceiver, to implement communication between the apparatus 1300 and another device or a communication network. For example, the environment information around the vehicle may be obtained through the communication interface 1303.

The bus 1304 may include a path for transferring information between various components (for example, the memory 1301, the processor 1302, and the communication interface 1303) of the apparatus 1300.

An embodiment of this application further provides a computer-readable medium. The computer-readable medium stores program code. When the computer program code is run on a computer, the computer is enabled to perform the method in any one of embodiments in FIG. 3 and FIG. 6 to FIG. 11.

An embodiment of this application further provides a chip, including at least one processor and a memory. The at least one processor is coupled to the memory, and is configured to read and execute instructions in the memory, to perform the method in any one of embodiments in FIG. 3 and FIG. 6 to FIG. 11.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network like the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, like a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An image display method, comprising:
obtaining environment information around a vehicle;
processing the environment information, to obtain an image of an environment around the vehicle; and
displaying the image on a display inside the vehicle based on a plurality of preset modes.

2. The method according to claim 1, wherein the environment information comprises image information in a plurality of directions of the vehicle, and the processing the environment information, to obtain an image of an environment around the vehicle comprises:
performing image fusion processing on image information in a plurality of continuous directions in the plurality of directions, to obtain an integrated image, wherein the integrated image indicates images in the plurality of continuous directions of the vehicle.

3. The method according to claim 2, wherein the plurality of directions comprise a left rear of the vehicle, a direct rear of the vehicle, and a right rear of the vehicle.

4. The method according to claim 3, wherein the displaying the image on a display inside the vehicle based on a plurality of preset modes comprises:
displaying the integrated image in full screen on the display inside the vehicle; or
displaying the integrated image in a partial area of the display.

5. The method according to any one of claims 1 to 4, wherein the display is a transparent display, and the displaying the image on a display inside the vehicle based on a plurality of preset modes comprises:
setting transparency of a preset object in the image on the display to first transparency, and setting transparency of a background other than the preset object in the image on the display to second transparency.

6. The method according to any one of claims 1 to 5, wherein the environment information further comprises illumination information, and the processing the environment information comprises:
determining, based on the illumination information, whether light causes a person in the vehicle to be dazzled.

7. The method according to claim 6, wherein when it is determined that the light causes the person in the vehicle to be dazzled, the displaying the image on a display inside the vehicle based on a plurality of preset modes comprises:
determining a first area of the display, wherein the first area comprises a position at which the light passes through the display; and
reducing transparency of the first area.

8. The method according to claim 7, wherein the method further comprises:
displaying the image in a second area of the display, wherein the second area does not intersect the first area.

9. The method according to any one of claims 1 to 8, wherein the environment information further comprises a status of a preset object around the vehicle, the status comprises a speed of the preset object and a distance between the preset object and the vehicle, and the processing the environment information comprises:
determining, based on the status of the preset object and a preset standard, whether the preset object is dangerous to the vehicle.

10. The method according to claim 9, wherein the displaying the image on a display inside the vehicle based on a plurality of preset modes comprises:
making a first identifier on the display for a preset object that is in the image and that is dangerous to the vehicle, and/or making a second identifier on the display for a preset object that is in the image and that is non-dangerous to the vehicle.

11. The method according to any one of claims 1 to 10, wherein the display is disposed at any one or more of a front windshield, a rear windshield, a sunroof, and a vehicle window of the vehicle.

12. The method according to any one of claims 2 to 11, wherein the method further comprises:
determining a first direction in the plurality of directions based on a driving status of the vehicle; and
adjusting a display mode of image information in the first direction on the display, wherein the display mode is one or more of the plurality of preset modes.

13. An image display apparatus, comprising:
an obtaining unit, configured to obtain environment information around a vehicle; and
a processing unit, configured to process the environment information, to obtain an image of an environment around the vehicle, wherein
the processing unit is further configured to display the image on a display inside the vehicle based on a plurality of preset modes.

14. The apparatus according to claim 13, wherein the environment information comprises image information in a plurality of directions of the vehicle, and the processing unit is specifically configured to:
perform image fusion processing on image information in a plurality of continuous directions in the plurality of directions, to obtain an integrated image, wherein the integrated image indicates images in the plurality of continuous directions of the vehicle.

15. The apparatus according to claim 14, wherein the plurality of directions comprise a left rear of the vehicle, a direct rear of the vehicle, and a right rear of the vehicle.

16. The apparatus according to claim 15, wherein the processing unit is specifically configured to:
display the integrated image in full screen on the display inside the vehicle; or
display the integrated image in a partial area of the display.

17. The apparatus according to any one of claims 13 to 16, wherein the display is a transparent display, and the processing unit is specifically configured to:
set transparency of a preset object in the image on the display to first transparency, and set transparency of a background other than the preset object in the image on the display to second transparency.

18. The apparatus according to any one of claims 13 to 17, wherein the environment information further comprises illumination information, and the processing unit is specifically configured to:
determine, based on the illumination information, whether light causes a person in the vehicle to be dazzled.

19. The apparatus according to claim 18, wherein when it is determined that the light causes the person in the vehicle to be dazzled, the processing unit is further configured to:
determine a first area of the display, wherein the first area comprises a position at which the light passes through the display; and
reduce transparency of the first area.

20. The apparatus according to claim 19, wherein the processing unit is further configured to:
display the image in a second area of the display, wherein the second area does not intersect the first area.

21. The apparatus according to any one of claims 13 to 20, wherein the environment information further comprises a status of a preset object around the vehicle, the status comprises a speed of the preset object and a distance between the preset object and the vehicle, and the processing unit is specifically configured to:
determine, based on the status of the preset object and a preset standard, whether the preset object is dangerous to the vehicle.

22. The apparatus according to claim 21, wherein the processing unit is further configured to:
make a first identifier on the display for a preset object that is in the image and that is dangerous to the vehicle, and/or make a second identifier on the display for a preset object that is in the image and that is non-dangerous to the vehicle.

23. The apparatus according to any one of claims 13 to 22, wherein the display is disposed at any one or more a front windshield, a rear windshield, a sunroof, and a vehicle window of the vehicle.

24. The apparatus according to any one of claims 14 to 23, wherein the processing unit is further configured to:
determine a first direction in the plurality of directions based on a driving status of the vehicle; and
adjust a display mode of image information in the first direction on the display, wherein the display mode is one or more of the plurality of preset modes.

25. A computer-readable medium, wherein the computer-readable medium stores program code used by a device for execution, and the program code is used to perform the method according to claims 1 to 12.

26. A chip, wherein the chip comprises a processor and a data interface, and the processor reads, through the data interface, instructions stored in a memory, to perform the method according to claims 1 to 12.

27. A computer program product, wherein the computer-readable medium stores program code used by a device for execution, and the program code is used to perform the method according to claims 1 to 12.

28. A vehicle, wherein the vehicle comprises the image display apparatus according to any one of claims 13 to 24.
